# EUROPÄISCHE PATENTSCHRIFT

(11) **EP 2 147 062 B1**
(45) Veröffentlichungstag und Bekanntmachung des Hinweises auf die Patenterteilung: **14.10.2015**
(21) Anmeldenummer: 08749217.9
(22) Anmeldetag: 29.04.2008
(51) Int. Cl.: C09D 4/00

(54) **ANIONISCHE WASSERLÖSLICHE ADDITIVE**
ANIONIC WATER-SOLUBLE ADDITIVES
ADDITIFS HYDROSOLUBLES ANIONIQUES

(30) Priorität: 10.05.2007 DE 102007021869
(43) Veröffentlichungstag der Anmeldung: 27.01.2010
(73) Patentinhaber: CLARIANT INTERNATIONAL LTD, 4132 Muttenz (CH)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Mikulecky, Klaus
(86) Internationale Anmeldenummer: PCT/EP2008/003456
(87) Internationale Veröffentlichungsnummer: WO 2008/138486

(56) Entgegenhaltungen:
- DE-A1-102004 042 799
- JP-A- 2007 070 567
- US-A- 5 484 851
- US-A1- 2002 132 890
- US-B1- 6 511 952
- US-B1- 6 582 510

## Beschreibung

Gegenstand der vorliegenden Erfindung sind neuartige anionische Copolymere, die als Dispergiermittel für wasserbasierende Pigmentpräparationen verwendet werden, und ein Verfahren zur Herstellung dieser Copolymere.

Für die Dispergierung von Pigmenten im flüssigen Medium sind üblicherweise Dispergiermittel notwendig. Diese Dispergiermittel, unterstützt durch geeignete Benetzer, fördern als oberflächenaktive Mittel die Benetzung der zu dispergierenden Pigmente und erleichtern das Aufbrechen von Agglomeraten und Aggregaten bei der Herstellung der Pigmentdispersion, welches in der Regel mit Hilfe einer Mahlung bewerkstelligt wird, um hohe mechanische Kräfte in das System einzutragen. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden.
Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

Kammcopolymere werden meist unter Verwendung von Makromonomeren auf Basis von Mono(meth)acrylsäureestern als Comonomere hergestellt und unterscheiden sich von anderen polymeren Dispergiermitteln dadurch, dass sie eine klar geordnete Struktur aufweisen, da Hydrophobie und Hydrophilie bzw. Polarität auf die Haupt- und die Seitenketten aufgeteilt werden kann.

In EP 1 293 523 wird ein Dispergiermittel beschrieben, welches ein Polymer ist, das ein gewichtsgemitteltes Molekülgewicht von etwa 5.000 bis 100.000 aufweist und 20 bis 80 Gew.-% eines hydrophilen Rückgrats und 80 bis 20 Gew.-% makromonomerer Seitenketten umfasst. Das Rückgrat besteht, bezogen auf das Gewicht des Rückgrats, zu 70 bis 98 Gew.-% aus polymerisierten ethylenisch ungesättigten Monomeren, die keine Carboxylgruppen enthalten, sowie zu 2 bis 30 Gew.-% aus polymerisierten ethylenisch ungesättigten Monomeren, die eine Carboxylgruppe tragen, wobei zumindest 10 % der Carboxylgruppen mit einem Amin oder einer anorganischen Base neutralisiert sind. Das Rückgrat weist im Vergleich zu den Seitenketten hydrophile Eigenschaften auf. Die Seitenketten bestehen aus Makromonomeren polymerisierter ethylenisch ungesättigter Monomere.

In EP 1 081 169 werden verzweigte Polymere beschrieben, die sich aus folgender Monomerenmischung ableiten:
(A) 50 bis 93 Gew.-% wenigstens eines ethylenisch ungesättigten Monomers,
(B) 2 bis 25 Gew.-% wenigstens eines ethylenisch ungesättigten Makromonomers mit einem Molekülgewicht von 1.000 bis 20.000, und
(C) 5 bis 25 Gew.-% wenigstens eines polymerisierbaren Imidazolderivats.

EP 1 562 696 beschreibt in wässriger Emulsionspoiymerisation hergestellte polymere Dispergiermittel, welche mit Makromonomeren synthetisiert werden, die aus Polyalkylenglykol-Mono(meth)acrylaten bestehen. Die Hauptkette des Polymers muss ethylenisch ungesättigte Monomere mit mindestens einer Aminögruppe enthalten.

In DE 10 2005 019 384 (WO 2006 114 303 A1) werden Kammpolymere beschrieben, die aus ethylenisch ungesättigten Monomeren wie Alkyl(meth)acrylaten und Aryl(meth)acrylaten in Kombination mit einem reinen Polyethylenglykol-Mono(meth)acrylat synthetisiert werden, und als Dispergiermittel verwendet werden.

DE 10 2004 042 799 A1 beschreibt ein Verfahren zur Herstellung von Polyalkylenglykol-mono(meth)acrylsäureestern und deren Verwendung als verflüssigendes Additiv in zementhaltigen Zubereitungen.
US 2002/132 890 A1 beschreibt wasserbasierende Acrylat-Emulsionen., die Copolymere aus einem ethylenisch ungesättigten Monomer, einem vinylaromatischen Monomer, einem nicht-funktionellen Polyalkylenglykol-acrylat und einem phosphorylierten Polyalkylenglykol-acrylat enthalten.
US-A-5 484 851 offenbart Polyvinyl-Polyoxyalkylene-Blockcopolymere.
JP 2007-70567 A beschreibt phosphorylierte Polyalkylenglykol-acrylate.
US-B1-6 511 952 und US-B1-6 582 510 offenbaren nichtionische Acrylsäure-Polyether-Kammpolymere.

Keines der in den oben genannten Schriften dargelegten polymeren Dispergiermittel ist jedoch in der Lage, gleichzeitig das an anionische Novolak-Dispergiermittel gestellte Anforderungsprofil zu erfüllen:
(i) Organische Pigmente in hoher Konzentration von über 40 Gew.-% niederviskos zu dispergieren;
(ii) Dispersionen von hoher und reproduzierbarer Farbstärke zu bilden, die vor allem Weißdispersionen und Zellstoffsuspensionen unter hoher Verträglichkeit einfärben können;
(iii) Vermeidung einer Reagglomeration der Pigmentteilchen;
(iv) Schaumfreiheit der Dispersionen.

Die bisher gebräuchlichen Novolak-Dispergiermittel enthalten jedoch als Folge ihrer Herstellung Reste von Alkylphenolen, häufig Nonylphenol, und deren Ethoxylaten. Da Alkylphenoläthoxylate bzw. deren Abbauprodukte in der Umwelt kaum abgebaut werden, reichern sie sich an. Dies ist problematisch, da sie auf Wasserorganismen eine hormonelle Wirkung zieigen. Daher wurden in vielen Ländern Rechtsvorschriften erlassen (z. B. 2003/53/EC), die den Einsatz von Stoffen, die Alkylphenole bzw. ihre Ethoxylate enthalten, in offenen Stoffkreisläufen beschränken bzw. verbieten.

Bisherige Untersuchungen haben gezeigt, dass es nach wie vor außerordentlich schwierig ist, Dispergiermittel zu synthetisieren, die anionischen Novolaksystemen äquivalent sind. Gefordert sind neue Dispergiermittel, die organische Pigmente in hoher Konzentration von über 40 % niederviskos dispergieren können. Die Dispersionen müssen leicht herstellbar sein, d.h. die Pigmente müssen leicht benetzbar und leicht ins wässrige Medium einarbeitbar sein. Die Dispersion muss eine hohe und reproduzierbare Farbstärke aufweisen und diese über einen Zeitraum von mehreren Jahren stabil halten. Ebenfalls sollten alle weiteren coloristischen Parameter wie z. B. der Bunttonwinkel und die Reinheit reproduzierbar und stabil sein. Weiterhin muss die Dispersion über eine niedrige Viskosität verfügen; die Pigmente dürfen weder agglomerieren noch flockulieren, noch dürfen sie aufschwimmen oder sedimentieren. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d. h. es darf sich unter Scherung nicht die Farbstärke oder Coloristik ändern und die Dispersion muss unter diesen Bedingungen flockulationsstabil bleiben.

Überraschenderweise wurde gefunden, dass spezielle anionische KammCopolymere, die mit Hilfe von Makromonomeren aus Pofyethylen/Polypropylenglykol-Mono(meth)acrylsäureestern hergestellt werden, diese Aufgabe erfüllen.

Gegenstand der Erfindung sind daher anionisch modifizierte Copolymere, erhältlich durch Polymerisation der Monomere (A), (B) und (C) unter Erhalt von nichtionischen Copolymeren, die an den Polyoxyalkylen-Seitenketten reaktive terminale OH-Gruppen besitzen, und anschließende Umsetzung der terminalen OH-Gruppen zu den anionischen Endgruppen SO₃M, CH₂COOM oder Sulfosuccinat, wobei M die Bedeutung H, einwertiges Metallkation, zweiwertiges Metallkation, NH₄⁺, ein sekundäres, tertiäres oder quartäres Ammoniumion, oder eine Kombination davon hat, wobei
(A) ein Monomer der Formel (I) ist 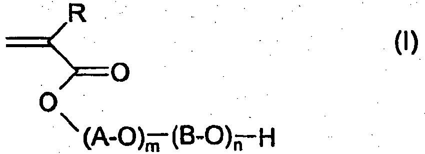 wobei
   - A: für C₂-C₄-Alkylen und
   - B: für ein von A unterschiedliches C₂-C₄-Alkylen steht,
   - R: für Wasserstoff oder Methyl steht,
   - m: eine Zahl von 1 bis 500, vorzugsweise 1 bis 50, ist;
   - n: eine Zahl von 1 bis 500, vorzugsweise 1 bis 50, ist,
   wobei die Summe m + n gleich 2 bis 1.000 ist;
(B) ein ethylenisch ungesättigtes Monomer ist, das eine aromatische Gruppe enthält; und
sich durch die Formel (IIa) oder (IIb) beschreibt. 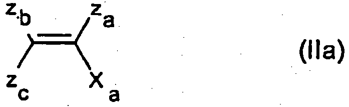 wobei
- Xₐ: für einen aromatischen oder araliphatischen Rest mit 3 bis 30 C-Atomen steht, der gegebenenfalls eines oder mehrere der Heteroatome N, O und S enthält,
- Zₐ: für H oder (C₁-C₄)-Alkyl steht,
- Z_{b}: für H oder (C₁-C₄)-Alkyl steht,
- Z_{c}: für H oder (C₁-C₄)-Alkyl steht; 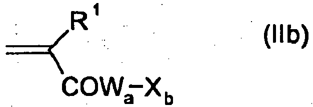
wobei
- R¹: für Wasserstoff oder Methyl steht,
- X_{b}: für einen aromatischen oder araliphatischen Rest mit 3 bis 30 C-Atomen steht, der gegebenenfalls eines oder mehrere der Heteroatome N, O und S enthält,
- Wₐ: für Sauerstoff oder die Gruppe NH steht; und
ein ethylenisch ungesättigtes Monomer (C), das einen Alkylrest enthält und sich durch die Formel (III) beschreibt: 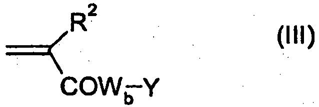 wobei
- R²: für Wasserstoff oder Methyl steht,
- Y: für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, oder ungesättigt sein kann,
- W_{b}: für Sauerstoff oder die Gruppe NH steht.

Das erfindungsgemäße Copolymer besitzt übliche endständige Gruppen, welches durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.
Die anionischen Endgruppen können Sulfate, Carboxylate oder Phosphate sein.

Der molare Anteil der Monomere beträgt bevorzugt 1 bis 80 % für das Monomer (A), 0,1 bis 80 % für das Monomer (B), und 0,1 bis 80 % für das Monomer (C). Besonders bevorzugt liegt der molare Anteil der Monomere bei 10 bis 70 % für Monomer (A), bei 10 bis 60 % für Monomer (B) und bei 10 bis 60 % für Monomer (C).

Die Alkylenoxideinheiten (A-O)ₘ und (B-O)ₙ können entweder statistisch oder wie im Falle einer bevorzugten Ausführungsform blockartig angeordnet vorliegen.
In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe (100 %) der Ethylenoxid- und Propylenoxid-Einheiten, beträgt.
Die Summe der Alkylenoxideinheiten kann prinzipiell n + m = 2 bis 1.000 sein, bevorzugt ist 2 bis 500, insbesondere 2 bis 100, besonders bevorzugt 5 bis 100.

Zu den Monomeren (B) gehören beispielsweise die folgenden Ester und Amide der Acrylsäure und Methacrylsäure: Phenyl, Benzyl, Tolyl, 2-Phenoxyethyl, Phenethyl.
Weitere Monomere (B) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.
Besonders bevorzugte Monomere (B) können sein: Styrol, 1-Vinylimidazol, Benzylmethacrylat, 2-Phenoxyethylmethacrylat und Phenethylmethacrylat.

Zu den Monomeren (C) gehören beispielsweise die folgenden Ester und Amide der Acrylsäure und Methacrylsäure: Methyl-, Ethyl-, Propyl-, Isopropyl-, n-Butyl-, Isobutyl-, t-Butyl-, Pentyl-, Hexyl-, 2-Ethylhexyl-, 3,3-Dimethylbutyl-, Heptyl-, Oktyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, Tetrahydrofurfuryl- und Tetrahydropyranyl.

Bevorzugte Monomere (C) sind die folgenden Alkyl-Ester bzw. Alkyl-Amide der Acrylsäure und Methacrylsäure: Methyl-, Ethyl-, Propyl-, Butyl-, Isobutyl-, Myristyl-, Octadecyl- und besonders bevorzugt 2-Ethylhexyl- und Lauryl-.

Die erfindungsgemäßen Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Eine wesentliche Eigenschaft, die die erfindungsgemäßen Polymere auszeichnet, ist, dass es sich bei den Polyalkylenglykol-Seitenketten des Polymers nicht um reine Polyethylenglykole oder Polypropylenglykole handelt. Stattdessen sind die Polyalkylenglykole entweder statistische oder vorzugsweise blockartige Polyalkylenglykole aus Propylenoxid- und Ethylenoxid-Einheiten. Erst die Feinabstimmung dieses EO/PO-Verhältnisses ermöglicht polymere Dispergiermittel, die zum Herstellen von hochkonzentrierten Pigmentdispersionen mit niedriger Viskosität geeignet sind. Durch die optimierten Verhältnisse des EO/PO-Anteils im Monomer (A) in Kombination mit den aromatischen und aliphatischen Monomeren (B) und (C) gelingt es, die Eigenschaften von novolakartigen Dispergiermitteln so nachzubilden, dass ein sehr ähnliches Eigenschaftsprofil erhalten wird.

Im Gegensatz zu den erfindungsgemäßen Polymeren sind Polymere mit Carboxylatgruppen am Polymerrückgrat nicht für die Herstellung von Pigmentdispersionen mit hohen Konzentrationen an organischen Pigmenten von über 40 % geeignet, da sie zu hohen Viskositäten führen.

Die Herstellung der erfindungsgemäßen Copolymere kann mittels radikalischer Polymerisation erfolgen. Die Polymerisationsreaktion kann kontinuierlich, diskontinuierlich oder semi-kontinuierlich durchgeführt werden.

Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höhersiedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid. tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Im Anschluss an die Polymerisation wird das Lösungsmittel entfernt.
Das so erhaltene nichtionische Polymer besitzt nun an den Polyoxyalkylen-Seitenketten reaktive Hydroxy-Funktionen, die im folgenden Schritt zu anionischen Funktionalitäten umgesetzt werden. Anionische Funktionalitäten sind beispielsweise SO₃M, CH₂COOM, oder Sulfosuccinat. M hat dabei die nachstehend definierte Bedeutung.

Die erfindungsgemäßen anionischen Copolymere lassen sich beispielsweise durch die Formeln (IV) oder (V) beschreiben.

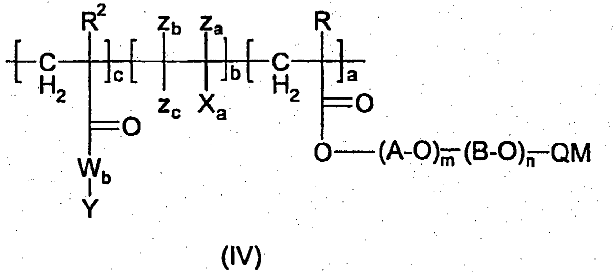

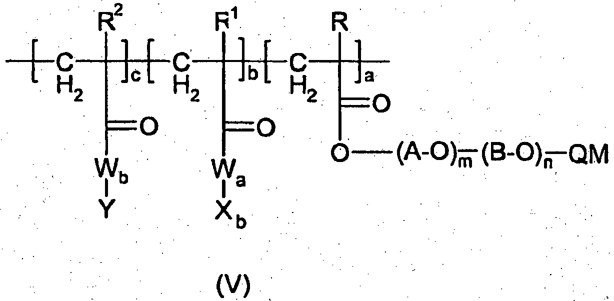

Die Indices a, b und c geben den molaren Anteil des jeweiligen Monomeren (A), (B) und (C) an, und zwar:
a = 0,01 - 0,8
b = 0,001 - 0,8
c = 0,001 - 0,8
wobei die Summe aus a + b + c gleich 1 ist,
und besonders bevorzugt
a = 0,1 - 0,7
b = 0,1 - 0,6
c = 0,1 - 0,6
wobei die Summe aus a + b + c gleich 1 ist.

In Formel (IV) und (V) steht Q für
SO₃, CH₂COO,
oder QM bedeutet 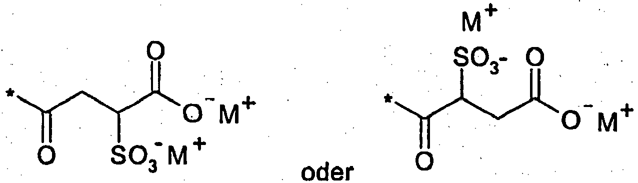 und M steht für H, ein einwertiges Metallkation, ein zweiwertiges Metallkation, NH₄⁺, ein sekundäres, tertiäres oder quartäres Ammoniumion, oder eine Kombination davon, oder für Äquivalente von zwei-, drei- oder mehrwertigen Metallionen wie beispielsweise Ca²⁺ oder Al³⁺(der Stern * gibt in der Markush-Formel an, dass an dieser Stelle eine Verknüpfung zum Polymer besteht).

Im Fall der Sulfosuccinate werden die nichtionischen Copolymere beispielsweise zunächst mit Maleinsäureanhydrid verestert. Hierbei kann ohne Lösungsmittel gearbeitet werden, die Reaktion kann in der Polymerschmelze unter erhöhter Temperatur durchgeführt werden. Anschließend wird der erhaltene Maleinsäuremonoester sulfoniert. Hierzu wird dieser beispielsweise in einer wässrigen Lösung mit Natriumsulfit oder Natriumpyrosulfit umgesetzt. Als Produkt erhält man die wässrige Lösung des Sulfosuccinat-Natriumsalzes.

Die Sulfatester werden beispielsweise durch Umsetzung der nichtionischen Copolymere mit Amidosulfonsäure hergestellt. Diese Umsetzung erfolgt in einer Schmelze des nichtionischen Copolymers unter Zugabe von Amidosulfonsäure. Hierbei werden die OH-Gruppen des Copolymers in Sulfatester umgewandelt, die dann als Ammoniumsalz vorliegen.

Durch Carboxymethylierung, beispielsweise mit Natriumchloracetat, können die terminalen Hydroxyfunktionen in die entsprechenden Polyethercarboxylate überführt werden.

Die Phosphorsäureester können beispielsweise durch die Umsetzung einer Schmelze des nichtionischen Copolymers mit Polyphosphorsäure oder Phosphorpentoxid erhalten werden. Bei dieser Reaktion können sowohl Phosphorsäuremonoester als auch -diester und -triester erhalten werden.

Ein weiterer Gegenstand der vorliegenden Erfindung ist die Verwendung des erfindungsgemäßen anionischen Copolymers als Dispergiermittel insbesondere für Pigmente und Füllstoffe, z. B. für wasserbasierende Pigmentkonzentrate, die zum Einfärben von Dispersions- und Lackfarben, Anstrichmitteln, Beschichtungsstoffen und Druckfarben verwendet werden, sowie zum Einfärben von Papier, Kartonagen und Textilien.

Synthesebeispiele für anionische Copolymere mit Ethersulfat-Gruppen an den Seitenketten:

### Synthesebeispiel 1

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 136,4 g 2-Ethylhexylmethacrylat, 71,6 g Styrol und 16,5 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 16,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 15.100 g/mol (nach GPC, Referenz: Polyethylenglykol).
Das so erhaltene Polymer wurde unter Stickstoff in einem Kolben mit 32,7 g Amidosulfonsäure und 1,0 g Harnstoff vorgelegt. Dann wurde unter Rühren für 4 Stunden auf 100 °C erwärmt. Anschließend wurde mit 50%iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

### Synthesebeispiel 2

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 79,2 g 2-Ethylhexylmethacrylat, 41,6 g Styrol und 13,4 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,4 g des Initiators AMBN, gelöst in 95 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 6.900 g/mol (nach GPC, Referenz: Polyethylenglykol).
Das so erhaltene Polymer wurde unter Stickstoff in einem Kolben mit 57,1 g Amidosulfonsäure und 1,8 g Harnstoff vorgelegt. Dann wurde unter Rühren für 4 Stunden auf 100 °C erwärmt. Anschließend wurde mit 50 %iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

### Synthesebeispiel 3

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 87,5 g Laurylmethacrylat, 35,8 g Styrol und 9,9 g 1-Dodecanthiol in 530 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 110 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 14.000 g/mol (nach GPC, Referenz: Polyethylenglykol).
Das so erhaltene Polymer wurde unter Stickstoff in einem Kolben mit 32,7 g Amidosulfonsäure und 1,0 g Harnstoff vorgelegt. Dann wurde unter Rühren für 4 Stunden auf 100 °C erwärmt. Anschließend wurde mit 50 %iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

### Synthesebeispiel 4

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 101,6 g Laurylmethacrylat, 41,6 g Styrol und 13,4 g 1-Dodecanthiol in 500 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,4 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 7.700 g/mol (nach GPC, Referenz: Polyethylenglykol).
Das so erhaltene Polymer wurde unter Stickstoff in einem Kolben mit 57,1 g Amidosulfonsäure und 1,0 g Harnstoff vorgelegt. Dann wurde unter Rühren für 4 Stunden auf 100 °C erwärmt. Anschließend wurde mit 50 %iger Natronlauge der pH-Wert auf 6,5-7,5 eingestellt. Über NMR-Spektroskopie konnte ein Umsetzungsgrad von > 95 % zum entsprechenden Schwefelsäureester-Ammoniumsalz ermittelt werden.

### Synthesebeispiele für anionische Copolymere mit Sulfosuccinat-Gruppen an den Seitenketten:

### Synthesebeispiel 5

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 %ig in t-Butanol), 117,3 g Laurylmethacrylat, 48,0 g Styrol und 11,1 g 1-Dodecanthiol in 730 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,1 g des Initiators AMBN, gelöst in 150 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers Mw = 22.000 g/mol (nach GPC, Referenz: Polyethylenglykol).
Das so erhaltene Copolymer wurde unter Stickstoff in einem Kolben vorgelegt. Dann wurde 22,7 g Maleinsäureanhydrid und 0,7 g Natriumhydroxid zugegeben und unter Rühren auf eine Temperatur von 75 bis 85 °C aufgeheizt. Bei dieser Temperatur wurde drei Stunden lang gerührt und anschließend 292 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 6

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 80,4 g Laurylmethacrylat, 32,9 g Styrol und 7,6 g 1-Dodecanthiol in 780 ml tert. Butanol unter Stickstoffeinleitung vorgelegt. Dann wurde unter Rühren auf eine Temperatur von 80°C aufgeheizt. Nach Erreichen der Reaktionstemperatur wurde 7,6 g des Initiators AMBN, gelöst in 160 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 30.500 g/mol (nach GPC, Referenz: Polyethylenglykol).
Das so erhaltene Copolymer wurde unter Stickstoff in einem Kolben vorgelegt. Dann wurde 15,5 g Maleinsäureanhydrid und 0,5 g Natriumhydroxid zugegeben und unter Rühren auf eine Temperatur von 75 bis 85 °C aufgeheizt. Bei dieser Temperatur wurde drei Stunden lang gerührt und anschließend 199 g wässrige Natriumsulfitlösung (10 %ig) zudosiert. Bei 60, bis 70 °C wurde bis zur Vollendung der Reaktion gerührt und schließlich der pH-Wert mit 50 %iger Natronlauge auf pH 7 eingestellt.

### Synthesebeispiel 7

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 202,8 g Stearylmethacrylat, 62,4 g Styrol und 11,5 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 8.100 g/mol (nach GPC, Referenz: Polyethylenglykol).
Das so erhaltene Copolymer wurde unter Stickstoff in einem Kolben vorgelegt. Dann wurde 58,8 g Maleinsäureanhydrid und 1,9 g Natriumhydroxid zugegeben und unter Rühren auf eine Temperatur von 75 bis 85 °C aufgeheizt. Bei dieser Temperatur wurde drei Stunden lang gerührt und anschließend 756 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 8

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 38,2 g Isobornylmethacrylat, 30,3 g Benzylmethacrylat und 13,2 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,2 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Nach dem Abkühlen auf Raumtemperatur wurde das Lösungsmittel im Vakuum entfernt. Molmasse des erhaltenen Polymers M_{w}=15.000 g/mol (nach GPC, Referenz: Polyethylenglykol).
Das so erhaltene Copolymer wurde unter Stickstoff in einem Kolben vorgelegt. Dann wurde 33,7 g Maleinsäureanhydrid und 1,1 g Natriumhydroxid zugegeben und unter Rühren auf eine Temperatur von 75 bis 85 °C aufgeheizt. Bei dieser Temperatur wurde drei Stunden lang gerührt und anschließend 433 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 9

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 % in t-Butanol), 39,3 g Tetrahydrofurfuryl-methacrylat, 87,8 g Phenethylmethacrylat und 8,9 g 1-Dodecanthiol in 670 ml tert. Butanol unter Stickstoffeinleitung vorgelegt. Dann wurde unter Rühren auf eine Temperatur von 80 °C aufgeheizt. Nach Erreichen der Reaktionstemperatur wurde 8,9 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 25.800 g/mol (nach GPC, Referenz: Polyethylenglykol). Das so erhaltene Copolymer wurde unter Stickstoff in einem Kolben vorgelegt. Dann wurde 22,7 g Maleinsäureanhydrid und 0,7 g Natriumhydroxid zugegeben und unter Rühren auf eine Temperatur von 75 bis 85 °C aufgeheizt. Bei dieser Temperatur wurde drei Stunden lang gerührt und anschließend 292 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 10

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 25,0 g 2-Ethoxyethylmethacrylat, 29,7 g 1-Vinylimidazol und 6,1 g 1-Dodecanthiol in 700 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,1 g des Initiators AMBN, gelöst in 140 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 26.000 g/mol (nach GPC, Referenz: Polyethylenglykol). Das so erhaltene Copolymer wurde unter Stickstoff in einem Kolben vorgelegt. Dann wurde 15,5 g Maleinsäureanhydrid und 0,5 g Natriumhydroxid zugegeben und unter Rühren auf eine Temperatur von 75 bis 85 °C aufgeheizt. Bei dieser Temperatur wurde drei Stunden lang gerührt und anschließend 199 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 11

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 69,0 g Laurylacrylat, 52,8 g Benzylmethacrylat und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 7.700 g/mol (nach GPC, Referenz: Polyethylenglykol).
Das so erhaltene Copolymer wurde unter Stickstoff in einem Kolben vorgelegt. Dann wurde 58,8 g Maleinsäureanhydrid und 1,9 g Natriumhydroxid zugegeben und unter Rühren auf eine Temperatur von 75 bis 85 °C aufgeheizt. Bei dieser Temperatur wurde drei Stunden lang gerührt und anschließend 755 g wässrige Natriumsulfitlösung (10 %ig) zudosiert. Bei 60 bis 70 °C wurde bis zur Vollendung der Reaktion gerührt und schließlich der pH-Wert mit 50%iger Natronlauge auf pH 7 eingestellt.

### Synthesebeispiel 12

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 38,2 g 1-Vinyl-2-pyrrolidon, 107,3 g Styrol und 16,5 g 1-Dodecanthiol in 580 ml tert. Butanol unter Stickstoffeinleitung vorgelegt. Dann wurde unter Rühren auf eine Temperatur von 80 °C aufgeheizt. Nach Erreichen der Reaktionstemperatur wurde 16,5g des Initiators AMBN, gelöst in 120 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 12.100 g/mol (nach GPC, Referenz: Polyethylenglykol).
Das so erhaltene Copolymer wurde unter Stickstoff in einem Kolben vorgelegt. Dann wurde 33,7 g Maleinsäureanhydrid und 1,1 g Natriumhydroxid zugegeben und unter Rühren auf eine Temperatur von 75 bis 85 °C aufgeheizt. Bei dieser Temperatur wurde drei Stunden lang gerührt und anschließend 433 g wässrige Natriumsulfitlösung (10 %ig) zudosiert. Bei 60 bis 70 °C wurde bis zur Vollendung der Reaktion gerührt und schließlich der pH-Wert mit 50%iger Natronlauge auf pH 7 eingestellt.

### Synthesebeispiel 13

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 31,3 g 2-Ethylhexylmethacrylat, 27,8 g Benzylmethacrylat und 4,6 g 1-Dodecanthiol in 700 ml tert. Butanol unter Stickstoffeinleitung vorgelegt. Dann wurde unter Rühren auf eine Temperatur von 80 °C aufgeheizt. Nach Erreichen der Reaktionstemperatur wurde 4,6 g des Initiators AMBN, gelöst in 140 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 27.000 g/mol (nach GPC, Referenz: Polyethylenglykol). Das so erhaltene Copolymer wurde unter Stickstoff in einem Kolben vorgelegt. Dann wurde 15,5 g Maleinsäureanhydrid und 0,5 g Natriumhydroxid zugegeben und unter Rühren auf eine Temperatur von 75 bis 85 °C aufgeheizt. Bei dieser Temperatur wurde drei Stunden lang gerührt und anschließend 199 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 14

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 % in t-Butanol), 58,7 g Laurylmethacrylat, 43,9 g Phenethylmethacrylat und 6,7 g 1-Dodecanthiol in 630 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,7 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 23.000 g/mol (nach GPC, Referenz: Polyethylenglykol).
Das so erhaltene Copolymer wurde unter Stickstoff in einem Kolben vorgelegt. Dann wurde 22,7 g Maleinsäureanhydrid und 0,7 g Natriumhydroxid zugegeben und unter Rühren auf eine Temperatur von 75 bis 85 °C aufgeheizt. Bei dieser Temperatur wurde drei Stunden lang gerührt und anschließend 292 g wässrige Natriumsulftlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 15

In einem Kolben mit Rührer, Rückflusskühler, Innenthermometer und Stickstoffeinleiturig wurden 258 g Polyalkylenglykolmonomethacrylat (Molmasse 750, molares EO/PO-Verhältnis 6,3), 116,3 g Stearylmethacrylat, 70,9 g 2-Phenoxyethylmethacrylat und 9,9 g 1-Dodecanthiol in 620 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 120 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 11.200 g/mol (nach GPC, Referenz: Polyethylenglykol).
Das so erhaltene Copolymer wurde unter Stickstoff in einem Kolben vorgelegt. Dann wurde 33,7 g Maleinsäureanhydrid und 1,1 g Natriumhydroxid zugegeben und unter Rühren auf eine Temperatur von 75 bis 85 °C aufgeheizt. Bei dieser Temperatur wurde drei Stunden lang gerührt und anschließend 433 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 16

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 0,43), 72,0 g Laurylacrylat, 52,8 g Benzylmethacrylat und 11,1 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,1g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 8.400 g/mol (nach GPC, Referenz: Polyethylenglykol).
Das so erhaltene Copolymer wurde unter Stickstoff in einem Kolben vorgelegt. Dann wurde 58,8 g Maleinsäureanhydrid und 1,9 g Natriumhydroxid zugegeben und unter Rühren auf eine Temperatur von 75 bis 85 °C aufgeheizt. Bei dieser Temperatur wurde drei Stunden lang gerührt und anschließend 755 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 17

In einem Kolben mit Rührer, Rückflusskühler, Innenthermometer und Stickstoffeinleitung wurden 258 g Polyalkylenglykolmonömethacrylat (Molmasse 750, molares EO/PO-Verhältnis 0,22), 87,5 g Laurylmethacrylat, 35,8 g Styrol und 9,9 g 1-Dodecanthiol in 530 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 110 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Nach dem Abkühlen auf Raumtemperatur wurde das Lösungsmittel im Vakuum entfernt. Molmasse des erhaltenen Polymers M_{w} = 10.700 g/mol (nach GPC, Referenz: Polyethylenglykol).
Das so erhaltene Copolymer wurde unter Stickstoff in einem Kolben vorgelegt. Dann wurde 33,7 g Maleinsäureanhydrid und 1,1 g Natriumhydroxid zugegeben und unter Rühren auf eine Temperatur von 75 bis 85 °C aufgeheizt. Bei dieser Temperatur wurde drei Stunden lang gerührt und anschließend 433 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 18

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 0,30, 70 % in t-Butanol), 58,7 g Laurylmethacrylat, 43,9 g Phervethylmethacrylat und 6,7 g 1-Dodecanthiol in 630 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,7 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 24.000 g/mol (nach GPC, Referenz: Polyethylenglykol). Das so erhaltene Copolymer wurde unter Stickstoff in einem Kolben vorgelegt. Dann wurde 22,7 g Maleinsäureanhydrid und 0,7 g Natriumhydroxid zugegeben und unter Rühren auf eine Temperatur von 75 bis 85 °C aufgeheizt. Bei dieser Temperatur wurde drei Stunden lang gerührt und anschließend 292 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 19

In einem Kolben mit Rührer, Rückflusskühler, Innenthermometer und Stickstoffeinleitung wurden 388 g Polyalkylenglykolmonomethacrylat (Molmasse 750, molares EO/PO-Verhältnis 6,3), 68,2 g 2-Ethylhexylmethacrylat, 35,8 g Styrol und 11,6 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,6 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 15.000 g/mol (nach GPC, Referenz: Polyethylenglykol).
Das so erhaltene Copolymer wurde unter Stickstoff in einem Kolben vorgelegt. Dann wurde 50,7 g Maleinsäureanhydrid und 1,7 g Natriumhydroxid zugegeben und unter Rühren auf eine Temperatur von 75 bis 85 °C aufgeheizt. Bei dieser Temperatur wurde drei Stunden lang gerührt und anschließend 652 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 20

In einem Kolben mit Rührer, Rückflusskühler, Innenthermometer und Stickstoffeinleitung wurden 517 g Polyalkylenglykolmonomethacrylat (Molmasse 750, molares EO/PO-Verhältnis 6,3), 68,2 g 2-Ethylhexylmethacrylat-, 35,8 g Styrol und 13,2 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,2 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 10.000 g/mol (nach GPC, Referenz: Polyethylenglykol).
Das so erhaltene Copolymer wurde unter Stickstoff in einem Kolben vorgelegt. Dann wurde 67,6 g Maleinsäureanhydrid und 2,2 g Natriumhydroxid zugegeben und unter Rühren auf eine Temperatur von 75 bis 85 °C aufgeheizt. Bei dieser Temperatur wurde drei Stunden lang gerührt und anschließend 869 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 21

In einem Kolben mit Rührer, Rückflusskühler, Innenthermometer und Stickstoffeinleitung wurden 280 g Polyalkylenglykolmonomethacrylat (Molmasse 350, molares EO/PO-Verhältnis 1,7), 79,2 g 2-Ethylhexylmethacrylat, 41,6 g Styrol und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers Mw = 13.500 g/mol (nach GPC, Referenz: Polyethylenglykol).
Das so erhaltene Copolymer wurde unter Stickstoff in einem Kolben vorgelegt. Dann wurde 78,5 g Maleinsäureanhydrid und 2,6 g Natriumhydroxid zugegeben und unter Rühren auf eine Temperatur von 75 bis 85 °C aufgeheizt. Bei dieser Temperatur wurde drei Stunden lang gerührt und anschließend 1009 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 22

In einem Kolben mit Rührer, Rückflusskühler, Innenthermometer und Stickstoffeinleitung wurden 387 g Polyalkylenglykolmonomethacrylat (Molmasse 750, molares EO/PO-Verhältnis 6,3), 87,5 g Laurylmethacrylat, 35,8 g Styrol und 11,6 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,6 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 9.700 g/mol (nach GPC, Referenz: Polyethylenglykol).
Das so erhaltene Copolymer wurde unter Stickstoff in einem Kolben vorgelegt. Dann wurde 50,6 g Maleinsäureanhydrid und 1,7 g Natriumhydroxid zugegeben und unter Rühren auf eine Temperatur von 75 bis 85 °C aufgeheizt. Bei dieser Temperatur wurde drei Stunden lang gerührt und anschließend 650 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Synthesebeispiel 23

In einem Kolben mit Rührer, Rückflusskühler, Innenthermometer und Stickstoffeinleitung wurden 267 g Polyalkylenglykolmonomethacrylat (Molmasse 350, molares EO/PO-Verhältnis 1,7), 101,6 g Laurylmethacrylat, 41,6 g Styrol und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 12.000 g/mol (nach GPC, Referenz: Polyethylenglykol).
Das so erhaltene Copolymer wurde unter Stickstoff in einem Kolben vorgelegt. Dann wurde 74,8 g Maleinsäureanhydrid und 2,4 g Natriumhydroxid zugegeben und unter Rühren auf eine Temperatur von 75 bis 85 °C aufgeheizt. Bei dieser Temperatur wurde drei Stunden lang gerührt und anschließend 961 g wässrige Natriumsulfitlösung (10 %ig) zudosiert. Bei 60 bis 70 °C wurde bis zur Vollendung der Reaktion gerührt und schließlich der pH-Wert mit 50 %iger Natronlauge auf pH 7 eingestellt.

### Anwendungsbeispiel Pigmentpräparation

### Herstellung einer Pigmentpräparation

Das Pigment wurde, entweder als Pulver, Granulat oder als Presskuchen, zusammen mit den Dispergiermitteln und anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

### Beurteilung einer Pigmentpräparation

Die Bestimmung der Farbstärke und des Farbtons erfolgte nach DIN 55986. Für den "Rub-Out-Test" wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit dem einzufärbenden Medium wurde mit einer Dispersionsfarbe für Außenanstriche ermittelt (Wasserbasis, 20 % TiO₂).

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.
Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:

| | |
|---|---|
| 50,0 Teile | C.I. Pigment Blau 15 |
| 8,0 Teile | Polymer aus Synthesebeispiel 23 |
| 1,5 Teile | Benetzer |
| 10,0 Teile | Ethylenglykol |
| 0,2 Teile | Konservierungsmittel |
| 30,3 Teile | Wasser |

Die Pigmentpräparation hat in der Weißdispersion eine hohe Farbstärke und ist stabil. Der Rub-Out-Test zeigt keine Farbstärkeunterschiede im Vergleich zur nachgeriebenen Fläche. Die Dispersion erweist sich als gut fließfähig und lagerstabil, da sie nach 28 Tagen Lagerung bei 50 °C ebenfalls noch gut fließfähig ist. Die Viskosität nach der Herstellung beträgt 430 mPa·s.

## Patentansprüche

1. Anionisch modifizierte Copolymere, erhältlich durch Polymerisation der Monomere (A), (B) und (C) unter Erhalt von nichtionischen Copolymeren, die an den Polyoxyalkylen-Seitenketten reaktive terminale OH-Gruppen besitzen, und anschließende Umsetzung der terminalen OH-Gruppen zu anionischen Endgruppen, wobei die anionischen Endgruppen einen der Reste SO₃M, CH₂COOM, oder Sulfosuccinat bedeuten, wobei M die Bedeutung H, einwertiges Metallkation, zweiwertiges Metallkation, NH₄⁺, ein se kundäres, tertiäres oder quartäres Ammoniumion, oder eine Kombination davon, hat.
(A) ein Monomer der Formel (I) ist 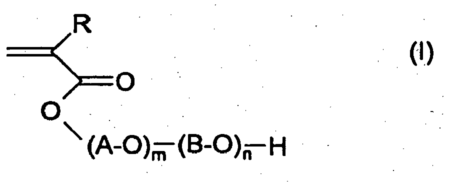 wobei
A für C₂-C₄-Alkylen und
B für ein von A unterschiedliches C₂₋C₄-Alkylen steht,
R für Wasserstoff oder Methyl steht,
m eine Zahl von 1 bis 500 ist;
n eine Zahl von 1 bis 500 ist,
wobei die Summe m + n gleich 2 bis 1.000 ist;
(B) ein ethylenisch ungesättigtes Monomer ist, das eine aromatische Gruppe enthält; und ; mit **dadurch gekennzeichnet ist, dass** das Monomer (B) eine Verbindung der Formel (IIa) oder (IIb) ist: 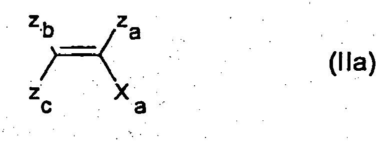 wobei
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht,
Z_{c} für H oder (C₁-C₄)-Alkyl steht; 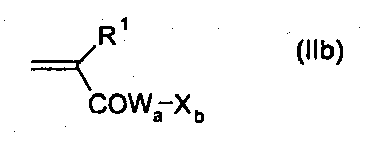
wobei
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht;
und
(C) ein ethylenisch ungesättigtes Monomer ist, das einen Alkylrest enthält, und **dadurch gekennzeichnet ist, dass** das Monomer (C) eine Verbindung der Formel (III) ist: 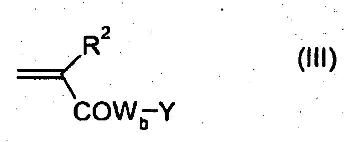 wobei
R² für Wasserstoff oder Methyl steht,
Y für einen aliphatischen Kohlenwasserstoffrest mit 1 bis 30 C-Atomen, steht, der linear oder verzweigt, oder auch cyclisch sein kann, , oder ungesättigt sein kann,
W_{b} für Sauerstoff oder die Gruppe NH steht.

2. Copolymer nach Anspruch 1, **dadurch gekennzeichnet, dass** der molare Anteil von Monomer (A) 1 bis 80 %, von Monomer (B) 0,1 bis 80 %, und von Monomer (C) 0,1 bis 80 % beträgt.

3. Copolymer nach Anspruch 1 oder 2, **dadurch gekennzeichnet, dass** der molare Anteil von Monomer (A) 10 bis 70 %, von Monomer (B) 10 bis 60 %, und von Monomer (C) 10 bis 60 % beträgt.

4. Copolymer nach einem oder mehreren der Ansprüche 1 bis 3, **dadurch gekennzeichnet, dass** die Alkylenoxideinheiten (A-O)ₘ und (B-O)ₙ blockartig angeordnet sind.

5. Copolymer nach einem oder mehreren der Ansprüche 1 bis 4, **dadurch gekennzeichnet, dass** (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten stehen, wobei der molare Anteil der Ethylenoxid-Einheiten 50 bis 98 %, bezogen auf die Summe der Ethylenoxid- und Propylenoxid-Einheiten beträgt.

6. Copolymer nach Anspruch 5, **dadurch gekennzeichnet, dass** der molare Anteil der Ethylenoxid-Einheiten 60 bis 95 %, bezogen auf die Summe der Ethylenoxid- und Propylenoxid-Einheiten, beträgt.

7. Copolymer nach einem oder mehreren der Ansprüche 1 bis 6, **gekennzeichnet durch** die Formeln (IV) oder (V) 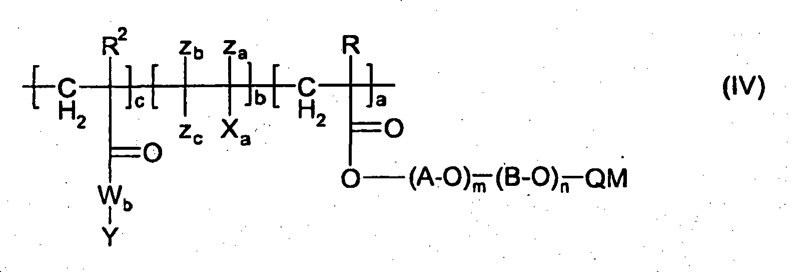 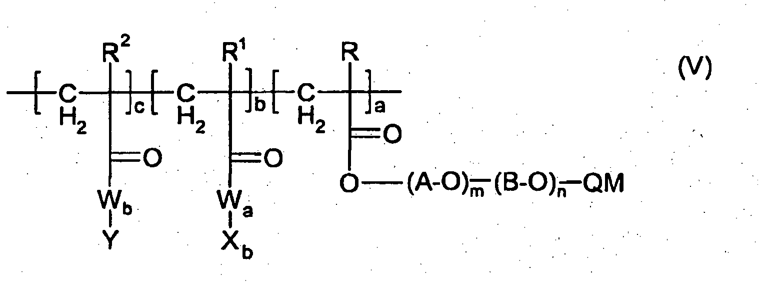 wobei
A für C₂-C₄-Alkylen und
B für ein von A unterschiedliches C₂-C₄-Alkylen steht,
R für Wasserstoff oder Methyl steht,
m eine Zahl von 1 bis 500 ist;
n eine Zahl von 1 bis 500 ist;
wobei die Summe m + n gleich 2 bis 1.000 ist;
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht;
R² für Wasserstoff oder Methyl steht,
Y für einen aliphatischen Kohlenwasserstoffrest mit 1 bis 30 C-Atomen, vorzugsweise 6 bis 30, insbesondere 9 bis 20 C-Atomen, steht, der linear oder verzweigt, oder auch cyclisch sein kann, oder ungesättigt ist,
W_{b} für Sauerstoff oder die Gruppe NH steht,
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht,
a = 0,01 bis 0,8; b = 0,001 bis 0,8; c = 0,001 bis 0,8;
wobei die Summe aus a + b + c gleich 1 ist,
Q die Bedeutung SO₃, CH₂COO, oder Sulfosuccinat hat, wobei M die Bedeutung H, einwertiges Metallkation, zweiwertiges Metallkation, NH₄⁺, ein sekundäres, tertiäres oder quartäres Ammoniumion, oder eine Kombination davon,hat.

8. Verfahren zur Herstellung eines Copolymers nach einem oder mehreren der Ansprüche 1 bis 7, wobei die Monomere (A), (B) und (C) radikalisch polymerisiert und die dabei entstehenden terminalen OH-Gruppen zu anionischen Endgruppen umgesetzt werden.

9. Verwendung eines Copolymers nach einem oder mehreren der Ansprüche 1 bis 7 als Dispergiermittel.

10. Verwendung nach Anspruch 9 als Dispergiermittel für Pigmente und Füllstoffe.

## Claims

1. Anionically modified copolymers obtainable by polymerization of monomers (A), (B) and (C) to obtain nonionic copolymers which have reactive terminal OH groups on the polyoxyalkylene side chains, and subsequent conversion of the terminal OH groups to anionic end groups, where the anionic end groups represent one of SO₃M, CH₂COOM and sulfosuccinate, where M represents H, a monovalent metal cation, a divalent metal cation, NH₄⁺, a secondary, tertiary or quaternary ammonium ion or a combination thereof,
(A) is a monomer of formula (I) 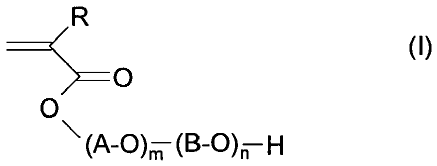 where
A represents C₂-C₄-alkylene,
B represents a C₂-C₄-alkylene other than A,
R represents hydrogen or methyl,
m is from 1 to 500;
n is from 1 to 500,
and the sum total of m + n is from 2 to 1000;
(B) is an ethylenically unsaturated monomer which contains an aromatic group; and wherein the monomer (B) is a compound of formula (IIa) or (IIb): 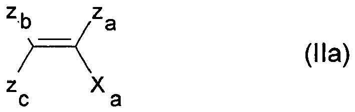 where
Xₐ represents an aromatic or araliphatic radical having 3 to 30 carbon atoms which optionally contains one or more of the hetero atoms N, O and S,
Zₐ represents H or (C₁-C₄)-alkyl,
Z_{b} represents H or (C₁-C₄)-alkyl,
Z_{c} represents H or (C₁-C₄)-alkyl; 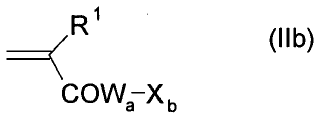
where
R¹ represents hydrogen or methyl,
X_{b} represents an aromatic or araliphatic radical having 3 to 30 carbon atoms which optionally contains one or more of the hetero atoms N, O und S,
Wₐ represents oxygen or an NH group, and
(C) is an ethylenically unsaturated monomer which contains an alkyl radical, and wherein the monomer (C) is a compound of formula (III): 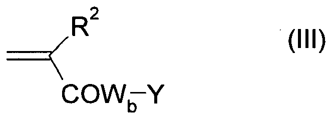
where
R² represents hydrogen or methyl,
Y represents an aliphatic hydrocarbyl radical having 1 to 30 carbon atoms, which may be linear or branched or else cyclic, and may also be unsaturated,
W_{b} represents oxygen or an NH group.

2. The copolymer as claimed in claim 1, wherein the molar fraction of monomer (A) is 1 to 80%, monomer (B) is 0.1 to 80% and monomer (C) is 0.1 to 80%.

3. The copolymer as claimed in claim 1 or 2, wherein the molar fraction of monomer (A) is 10 to 70%, monomer (B) is 10 to 60% and monomer (C) is 10 to 60%.

4. The copolymer as claimed in one or more of claims 1 to 3, wherein the alkylene oxide units (A-O)ₘ and (B-O)ₙ are in a blocklike arrangement.

5. The copolymer as claimed in one or more of claims 1 to 4, wherein (A-O)ₘ represents propylene oxide units and (B-O)ₙ represents ethylene oxide units, or (A-O)ₘ represents ethylene oxide units and (B-O)ₙ represents propylene oxide units, and the molar fraction of ethylene oxide units is 50 to 98%, based on the sum total of ethylene oxide and propylene oxide units.

6. The copolymer as claimed in claim 5, wherein the molar fraction of ethylene oxide units is 60 to 95%, based on the sum total of ethylene oxide and propylene oxide units.

7. The copolymer as claimed in one or more of claims 1 to 6, **characterized by** the formulae (IV) or (V) 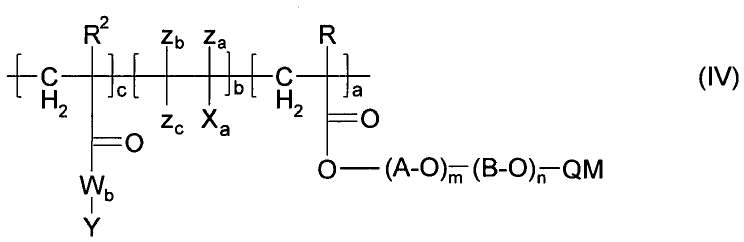 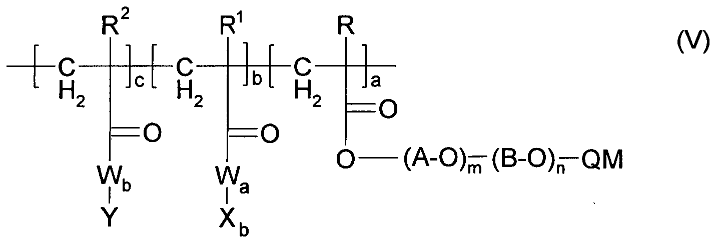 where
A represents C₂-C₄-alkylene,
B represents a C₂-C₄-alkylene other than A,
R represents hydrogen or methyl,
m is from 1 to 500;
n is from 1 to 500;
and the sum total of m + n is from 2 to 1000;
Xₐ represents an aromatic or araliphatic radical having 3 to 30 carbon atoms which optionally contains one or more of the hetero atoms N, O and S,
Zₐ represents H or (C₁-C₄)-alkyl,
Z_{b} represents H or (C₁-C₄)-alkyl,
Z_{c} represents H or (C₁-C₄)-alkyl;
R² represents hydrogen or methyl,
Y represents an aliphatic hydrocarbyl radical having 1 to 30 carbon atoms, preferably 6 to 30, particularly 9 to 20 carbon atoms, which may be linear or branched or else cyclic, and may also be unsaturated,
W_{b} represents oxygen or an NH group;
R¹ represents hydrogen or methyl,
X_{b} represents an aromatic or araliphatic radical having 3 to 30 carbon atoms which optionally contains one or more of the hetero atoms N, O und S,
Wₐ represents oxygen or an NH group,
a = 0.01 to 0.8; b = 0.001 to 0.8; c = 0.001 to 0.8;
subject to the proviso that the sum total of a + b + c is equal to 1,
Q represents SO₃, CH₂COO or sulfosuccinate, where M represents H, a monovalent metal cation, a divalent metal cation, NH₄⁺, a secondary, tertiary or quaternary ammonium ion or a combination thereof.

8. A process for producing a copolymer as claimed in one or more of claims 1 to 7, which comprises free-radically polymerizing the monomers (A), (B) and (C) and converting the resulting terminal OH groups to anionic end groups.

9. The use of a copolymer as claimed in one or more of claims 1 to 7 as a dispersant.

10. The use as claimed in claim 9 as a dispersant for pigments and fillers.

## Revendications

1. Copolymères modifiés anioniquement, pouvant être obtenus par polymérisation des monomères (A), (B) et (C) pour obtenir des copolymères non ioniques comprenant des groupes OH terminaux réactifs aux niveau des chaînes latérales polyoxyalkylènes, puis transformation des groupes OH terminaux en groupes terminaux anioniques, les groupes terminaux anioniques signifiant un des radicaux SO₃M, CH₂COOM ou sulfosuccinate, M ayant la signification H, cation métallique monovalent, cation métallique bivalent, NH₄⁺, un ion ammonium secondaire, tertiaire ou quaternaire ou une combinaison de ceux-ci,
(A) étant un monomère de formule (I) 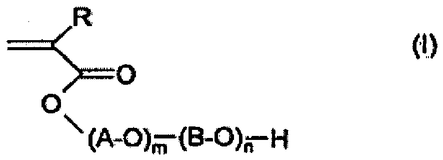 dans laquelle
A représente un alkylène en C₂ à C₄ et
B représente un alkylène en C₂ à C₄ différent de A,
R représente hydrogène ou méthyle,
m est un nombre de 1 à 500,
n est un nombre de 1 à 500,
la somme m + n étant de 2 à 1 000 ;
(B) étant un monomère éthyléniquement insaturé qui contient un groupe aromatique et qui est **caractérisé en ce que** le monomère (B) est un composé de formule (IIa) ou (IIb) 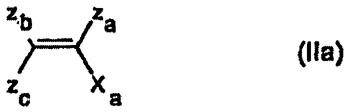 dans laquelle
Xₐ représente un radical aromatique ou araliphatique de 3 à 30 atomes C, qui contient éventuellement un ou plusieurs des hétéroatomes N, O et S,
Zₐ représente H ou alkyle en (C₁-C₄),
Z_{b} représente H ou alkyle en (C₁-C₄),
Z_{c} représente H ou alkyle en (C₁-C₄) ; 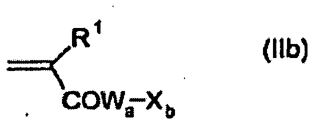
dans laquelle
R¹ représente hydrogène ou méthyle,
X_{b} représente un radical aromatique ou araliphatique de 3 à 30 atomes C qui contient éventuellement un ou plusieurs des hétéroatomes N, O et S,
Wₐ représente l'oxygène ou le groupe NH, et
(C) étant un monomère éthyléniquement insaturé, qui contient un radical alkyle et qui est **caractérisé en ce que** le monomère (C) est un composé de formule (III) : 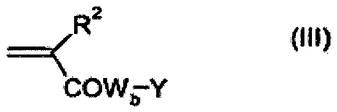 dans laquelle
R² représente hydrogène ou méthyle,
Y représente un radical hydrocarboné aliphatique de 1 à 30 atomes C qui peut être linéaire ou ramifié, ou également cyclique, ou qui peut être insaturé,
W_{b} représente l'oxygène ou le groupe NH.

2. Copolymère selon la revendication 1, **caractérisé en ce que** la proportion molaire est de 1 à 80 % pour le monomère (A), 0,1 à 80 % pour le monomère (B) et 0,1 à 80 % pour le monomère (C).

3. Copolymère selon la revendication 1 ou 2, **caractérisé en ce que** la proportion molaire est de 10 à 70 % pour le monomère (A), 10 à 60 % pour le monomère (B) et 10 à 60 % pour le monomère (C).

4. Copolymère selon une ou plusieurs des revendications 1 à 3, **caractérisé en ce que** les unités oxyde d'alkylène (A-O)ₘ et (B-O)ₙ sont agencées séquentiellement.

5. Copolymère selon une ou plusieurs des revendications 1 à 4, **caractérisé en ce que** (A-O)ₘ représente des unités oxyde de propylène et (B-O)ₙ des unités oxyde d'éthylène, ou (A-O)ₘ représente des unités oxyde d'éthylène et (B-O)ₙ des unités oxyde de propylène, la proportion molaire des unités oxyde d'éthylène étant de 50 à 98 %, par rapport à la somme des unités oxyde d'éthylène et oxyde de propylène.

6. Copolymère selon la revendication 5, **caractérisé en ce que** la proportion molaire des unités oxyde d'éthylène est de 60 à 95 %, par rapport à la somme des unités oxyde d'éthylène et oxyde de propylène.

7. Copolymère selon une ou plusieurs des revendications 1 à 6, **caractérisé par** les formules (IV) ou (V) 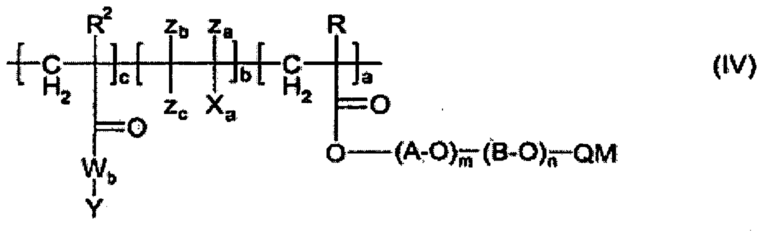 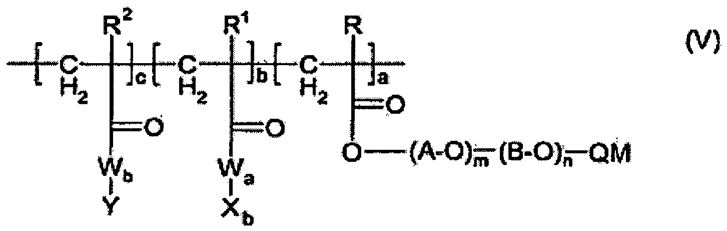 dans lesquelles
A représente un alkylène en C₂-C₄, et
B représente un alkylène en C₂-C₄ différent de A,
R représente hydrogène ou méthyle,
m représente un nombre de 1 à 500,
n représente un nombre de 1 à 500,
la somme m + n étant de 2 à 1 000,
Xₐ représente un radical aromatique ou araliphatique de 3 à 30 atomes C, qui contient éventuellement un ou plusieurs des hétéroatomes N, O et
S, Zₐ représente H ou alkyle en (C₁-C₄),
Z_{b} représente H ou alkyle en (C₁-C₄), et
Z_{c} représente H ou alkyle en (C₁-C₄),
R² représente hydrogène ou méthyle,
Y représente un radical hydrocarboné aliphatique de 1 à 30 atomes C, de préférence de 6 à 30, en particulier de 9 à 20, atomes C, qui peut être linéaire ou ramifié, ou également cyclique, ou qui est insaturé,
W_{b} représente l'oxygène ou le groupe NH,
R¹ représente hydrogène ou méthyle,
X_{b} représente un radical aromatique ou araliphatique de 3 à 30 atomes C qui contient éventuellement un ou plusieurs des hétéroatomes N, O et S,
Wₐ représente l'oxygène ou le groupe NH,
a = 0,01 à 0,8 ; b = 0,001 à 0,8 ; c = 0,001 à 0,8 ;
la somme de a + b + c valant 1,
Q a la signification SO₃, CH₂COO ou sulfosuccinate, M ayant la signification H, cation métallique monovalent, cation métallique bivalent, NH₄⁺, un ion ammonium secondaire, tertiaire ou quaternaire, ou une combinaison de ceux-ci.

8. Procédé de fabrication d'un copolymère selon une ou plusieurs des revendications 1 à 7, selon lequel les monomères (A), (B) et (C) sont polymérisés par voie radicalaire et les groupes OH terminaux ainsi formés sont transformés en groupes terminaux anioniques.

9. Utilisation d'un copolymère selon une ou plusieurs des revendications 1 à 7 en tant que dispersant.

10. Utilisation selon la revendication 9 en tant que dispersant pour pigments et charges.
